# EUROPÄISCHE PATENTSCHRIFT

(11) **EP 1 662 457 B1**
(45) Veröffentlichungstag und Bekanntmachung des Hinweises auf die Patenterteilung: **04.06.2008**
(21) Anmeldenummer: 05109590.9
(22) Anmeldetag: 14.10.2005
(51) Int. Cl.: G08G 1/0969, G01C 21/36

(54) **System und Verfahren zur Routenführung in unebenem Gelände**
Route guidance system and method for uneven terrain
Système et procédé de guidage d'un itinéraire sur des terrains accidentes

(30) Priorität: 25.11.2004 DE 102004056985
(43) Veröffentlichungstag der Anmeldung: 31.05.2006
(73) Patentinhaber: Continental Automotive GmbH, 30165 Hannover (DE)
(72) Erfinder: Schupfner, Markus, 93047 Regensburg (DE)

(56) Entgegenhaltungen:
- EP-A- 0 749 103
- EP-A- 1 054 354
- EP-A- 1 239 265
- US-A- 5 189 430
- PATENT ABSTRACTS OF JAPAN Bd. 2003, Nr. 04, 2. April 2003 (2003-04-02) -& JP 2002 350169 A (ALPINE ELECTRONICS INC), 4. Dezember 2002 (2002-12-04)
- PATENT ABSTRACTS OF JAPAN Bd. 1997, Nr. 01, 31. Januar 1997 (1997-01-31) -& JP 08 247777 A (ALPINE ELECTRON INC), 27. September 1996 (1996-09-27)
- PATENT ABSTRACTS OF JAPAN Bd. 015, Nr. 180 (P-1199), 9. Mai 1991 (1991-05-09) & JP 03 039779 A (PIONEER ELECTRON CORP), 20. Februar 1991 (1991-02-20)

## Beschreibung

Die Erfindung betrifft ein System und ein Verfahren zur Routenführung eines Bedieners von einer Startposition zu einer Zielposition entlang einer geplanten Soll-Route. Das System verfügt über eine Recheneinheit, eine mit der Recheneinheit verbundene Positionserfassungseinrichtung zur Bestimmung von dreidimensionalen Koordinaten einer aktuellen Position des Bedieners, eine mit der Recheneinheit verbundene Speichereinrichtung zur Speicherung der Soll-Route und zur Speicherung von dreidimensionalen Daten des Geländes, durch welches die Soll-Route verläuft, sowie über eine mit der Recheneinheit verbundene grafische Anzeigeeinheit.

Dreidimensionale Geländedaten werden in heutigen Routenführungssystemen dazu verwendet, den Verlauf von zu einer Soll-Route gehörenden Straßen in einer dreidimensionalen Ansicht grafisch dazustellen und an den Bediener visuell auszugeben, wobei die Sollroute in zweidimensionalen Koordinaten vorliegt. Unter Bediener wird dabei sowohl ein Fahrzeugführer verstanden, der ein in einem Kraftfahrzeug oder Schiff befindliches Routenführungssystem bedient, als auch ein Fußgänger oder Radfahrer, der ein mobiles Routenführungssystem verwendet.

Aus der EP 1 054 354 B1 sind ein Navigationssystem sowie ein Verfahren zum Gewinnen einer dreidimensionalen Kartendarstellung bekannt, bei denen zweidimensionale Straßenkartendaten mit dreidimensionalen, die Beschaffenheit eines Geländes wiedergebenden Daten verknüpft und die daraus generierte dreidimensionale Straßen- und Geländeansicht auf einer Anzeigeeinheit ausgegeben werden. Damit erhält der Bediener einen dreidimensionalen optischen Eindruck vom Geländeverlauf.

Aus der JP 2002-350169 ist ein Navigationssystem bekannt, das eine Route unter Berücksichtigung einer Steigung der Route ermitteln kann. Wenn von einer Routensucheinheit des Navigationssystems eine Vielzahl von Routen gesucht werden, generiert eine Kartenstellungseinheit Kartendaten, um eine zweidimensionale Landkarte zu erstellen in einem Bereich, der die Routen enthält. Eine Suchergebniszeicheneinheit erzeugt das Suchergebnis aus der Vielzahl von Routen auf der zweidimensionalen Karte und speichert sie auf einer Speichereinheit. Eine Schnittzeicheneinheit erzeugt Zeichnungsdaten, um einen Schnitt durch die Vielzahl von Routen darzustellen. Eine Bildzusammenstellungseinheit führt einen Prozess durch, durch den die zweidimensionale Karte zusammen mit den Suchergebnissen auf einer oberen Hälfte eines Bildschirms gezeigt wird. Der Schnitt durch die Vielzahl von Routen wird auf der unteren Hälfte des Bildschirms dargestellt.

Aus der JP 08247777 ist ein Verfahren bekannt, um Höheninformationen auf einfache Weise zusätzlich zu einer zweidimensionalen Karte anzuzeigen. Dazu wird ein Hauptgradient einer Route und ein Haupt- und ein maximaler Gradient eines Anstiegs und eines Abstiegs der Route ermittelt und angezeigt. Dazu werden Höhendaten benutzt, die an Knoten abgespeichert sind. Die Position der Start- und der Endpunkte einer Route, zu der die Steigung ermittelt werden soll, werden in eine Funktionseinheit eingegeben. Ein Systemcontroller wählt einen oder mehrere der Steigungen aus und stellt sie auf dem Bildschirm dar. Alle Steigungen aller Verbindungen auf der dargestellten Karte können ermittelt werden und farblich abhängig von dem Grad der Steigung dargestellt werden. Bei einer automatischen Routenführung können lediglich die Steigungen entlang der Route dargestellt werden.

Aus der EP 0 749 103 A1 ist ein Navigationssystem bekannt. Eine Kartensucheinheit liest aus einem Speichermedium Kartendaten, die zu der aktuellen Position eines Fahrzeugs passen. Eine Prozessoreinheit führt eine perspektivische Transformation der zweidimensionalen Karte durch und stellt die transformierte Karte auf einem Bildschirm dar.

Aus der EP 1 054 354 A1 sind ein Verfahren zum Gewinnen einer dreidimensionalen Kartendarstellung und ein Navigationssystem bekannt. Zum Gewinnen der dreidimensionalen Kartendarstellung aus zweidimensionalen Straßenkartendaten für das Navigatiönssystem werden darzustellende Straßensegmente mit dreidimensionalen, topologischen Daten verknüpft. Das Navigationssystem weist eine Umwandlungseinheit zur Umwandlung der zweidimensionalen Straßenkartendaten und dreidimensionalen topologischen Daten in eine dreidimensionale Kartendarstellung auf.

Aufgabe der vorliegenden Erfindung ist es, ein System und ein Verfahren der eingangs genannten Art anzugeben, mit denen eine verbesserte Routenführung möglich ist.

Die Aufgabe wird mit einem gattungsgemäßen System mit den kennzeichnenden Merkmalen des Anspruchs 1 sowie mit einem Verfahren nach Anspruch 14 gelöst.

Der Erfindung liegt die Überlegung zugrunde, den Informationsgehalt der bekannten Darstellung des Oberflächenverlaufs eines Geländes zu verbessern, um dem Bediener neben dem optischen Eindruck konkretere Daten zu vermitteln. Zu diesem Zweck werden von der Recheneinheit des erfindungsgemäßen Systems folgende, das erfindungsgemäße Verfahren beschreibende, Schritte ausgeführt: aus dem Verlauf der Soll-Route innerhalb des dreidimensionalen Geländes bestimmt die Recheneinheit mindestens einen Wert der Steigung der Soll-Route auf einem zugehörigen Teilabschnitt der Soll-Route, wobei dieser Teilabschnitt vor der aktuellen Position des Bedieners liegt, d.h. vom Bediener noch zurückzulegen ist. Weiterhin erzeugt die Recheneinheit aus der Soll-Route und aus den dreidimensionalen Daten des Geländes eine auf der Anzeigeeinheit auszugebende grafische Darstellung, die den Höhenverlauf der Soll-Route sowie die aktuelle Position wiedergibt und innerhalb derer der mindestens eine Wert der Steigung in grafischer Zuordnung zu dem zugehörigen Teilabschnitt der Soll-Route kenntlich gemacht ist. Ferner schneidet die Recheneinheit das dreidimensionale Gelände entlang des Höhenverlaufs der Soll-Route ab und gibt den verbliebenen Teil des dreidimensionalen Geländes sowie den Höhenverlauf der Soll-Route entlang der entstandenen Schnittkante grafisch auf der Anzeigeeinheit aus.

Die grafische Anzeige des Höhenverlaufs der Sollroute in Verbindung mit der aktuellen Position sowie die Kenntlichmachung mindestens eines noch vor der aktuellen Position liegenden Steigungswertes entlang der Sollroute geben dem Bediener eine Entscheidungshilfe an die Hand. Liegt der angezeigte Steigungswert im oberen Grenzbereich des Leistungsvermögens seines Fahrzeugs oder, im Falle eines Fußgängers oder Radfahrers, des Leistungsvermögens des eigenen Körpers, so kann der Bediener sein Verhalten entsprechend anpassen, beispielsweise häufiger Pausen einlegen oder, bei einem hohen negativen Steigungswert, langsamer in den Abhang hineingehen bzw. - fahren und gleichmäßiger abbremsen. Übersteigt der Steigungswert das Leistungsvermögen, kann sich der Bediener eine alternative Route berechnen lassen, wobei je nach Ausgestaltung des Systems die neue Route in dem System selbst oder in einem externen Routenplanungscomputer ermittelt und in die Speichereinrichtung übertragen wird. In jedem Fall wird die Routenführung verbessert, da der Bediener mehr Informationen über die geplante und noch vor ihm liegende Route erhält, wodurch er sich sicherer und besser dem tatsächlichen Verlauf entsprechend entlang dieser Route bewegen kann.

Durch das Schneiden des dreidimensionalen Geländes entlang des Höhenverlaufs der Soll-Route ab und durch das grafisch ausgeben des verbliebenen Teils des dreidimensionalen Geländes sowie des Höhenverlaufs der Soll-Route entlang der entstandenen Schnittkante auf der Anzeigeeinheit kann eine Beschriftung bzw. Kenntlichmachung des mindestens einen Steigungswertes entlang der Sollroute leichter erfassbar angeordnet werden, da die Soll-Route im Gegensatz zur Einbettung in ein dreidimensionales Gelände nicht mehr vollständig von Geländeflächen umgeben ist. Jenseits der Schnittkante ergeben sich genügend Freiflächen, auf denen sowohl der mindestens eine Wert der Steigung gut erkennbar angezeigt werden kann als auch weitere Beschriftungen oder Routenführungshinweise platziert werden können.

In einer Weiterbildung der Erfindung ist der mindestens eine Wert der Steigung ein über mehrere Teilabschnitte der Soll-Route gemittelter Wert. Beim Zurücklegen einer Route mit unterschiedlichen Anstiegen fällt es im allgemeinen weniger schwer, einen kurzen Steilpass mit hoher Steigung zu überwinden, als einen lang gezogenen Berg mit lediglich erhöhtem Steigungswert zu bewältigen. Da also Momentanwerte, die nur auf sehr kurzen Abschnitten gelten, unter Umständen nicht genügend informativ sind, bildet die Recheneinheit auch den Mittelwert der Steigungswerte mehrere solcher kurzer Abschnitte der Soll-Route.

In einer weiteren Ausgestaltung der Erfindung mittelt die Recheneinheit den Wert der Steigung über den Bereich der Soll-Route, der zwischen der aktuellen Position und der Zielposition liegt. Auf diese Weise wird dem Bediener mitgeteilt, welche durchschnittliche Steigung bis zum Ziel er noch zu überwinden hat, so dass er anhand dieses Wertes sein weiteres Vorgehen planen kann.

In einer weiteren Ausgestaltung ist vorgesehen, dass die Recheneinheit den Wert der Steigung über den Bereich der Soll-Route mittelt, der zwischen der Startposition und der aktuellen Position liegt. Damit wird dem Bediener also der durchschnittliche Steigungswert der bereits zurückgelegten Strecke mitgeteilt. Dies ermöglicht es ihm in Verbindung mit dem Höhenverlauf der Soll-Route und dem mindestens einen zukünftigen Steigungswert abzuschätzen, ob und wie der noch zurückzu legende Teil der Soll-Route zu bewältigen ist. Im Falle dass der zukünftige Steigungswert den durchschnittlichen Wert des gesamten noch zurückzulegenden Teils der Soll-Route darstellt, kann der Bediener beide Werte, den vergangenen und den zukünftigen, direkt vergleichen und seine eigene Leistungsfähigkeit bzw. die seines Fahrzeugs noch besser einschätzen.

Eine Weiterbildung der Erfindung sieht vor, dass der mindestens eine Wert der Steigung der maximale und/oder minimale Wert der Steigung auf dem zugehörigen Teilabschnitt ist. Alternativ ist vorgesehen, dass der mindestens eine Wert der Steigung der maximale und/oder minimale Wert der Steigung der gesamten Soll-Route ist. Diese Information hilft dem Bediener bei der allgemeinen Abschätzung des Schwierigkeitsgrades des Höhenverlaufs der Soll-Route.

In einer weiteren Ausführung der Erfindung ist vorgesehen, dass die Recheneinheit aus einer Aufeinanderfolge von dreidimensionalen Positionen zwischen der Startposition und der aktuellen Position eine aktuell zurückgelegte, dreidimensionale Ist-Route ermittelt und deren Höhenverlauf gemeinsam mit dem Höhenverlauf der Soll-Route grafisch darstellt und auf der Anzeigeeinheit ausgibt. Diese Ausgestaltung ist insbesondere in solchen Fällen von Vorteil, wenn der Bediener von der geplanten Soll-Route teilweise abgewichen ist, so dass Soll- und Ist-Route nicht in allen Bereichen übereinstimmen. Für die Ist-Route berechnet die Recheneinheit die selben Größen, die bisher für die Soll-Route beschrieben wurden, wie Minimal- und/oder Maximalsteigung, mittlere Steigung zwischen Startposition und aktueller Position und mittlere Steigung auf Teilabschnitten der Ist-Route.

In einer Unterausführung ermittelt die Recheneinheit die auf mindestens einem Teilabschnitt der Ist-Route erreichte mittlere Geschwindigkeit und stellt sie entlang des Höhenverlaufs der Ist-Route, zugeordnet zu dem mindestens einen Teilab schnitt, grafisch dar. Bei einer Beurteilung des Schwierigkeitsgrades der noch vor ihm liegenden Strecke hilft dem Bediener die für die Ist-Route angezeigte Geschwindigkeit im Zusammenhang mit dem Höhenverlauf der Soll- und der Ist-Route dahingehend, dass er die zukünftig erreichbare Geschwindigkeit besser abschätzen und sich für oder gegen das Weiterverfolgen der Soll-Route entscheiden kann.

In einer weiteren Ausgestaltung bettet die Recheneinheit den Höhenverlauf der Soll-Route und/oder der Ist-Route in eine dreidimensionale Darstellung des Geländes ein und gibt beides auf der Anzeigeeinheit aus. Damit wird der Höhenverlauf der Soll- und/oder Ist-Route für den Bediener noch anschaulicher sichtbar, da auch umliegendes Gelände mit angezeigt wird. Im Fall einer erforderlichen Neuplanung der Soll-Route kann der Bediener auf diese Weise besser beurteilen, welche alternativen Routenverläufe möglich sind und ob diese voraussichtlich einen einfacheren Höhenverlauf aufweisen werden.

Bei einer alternativen Weiterbildung der Erfindung schneidet die Recheneinheit das dreidimensionale Gelände entlang des Höhenverlaufs der Ist-Route ab und gibt den verbliebenen Teil des dreidimensionalen Geländes sowie den Höhenverlauf der Ist-Route entlang der entstandenen Schnittkante grafisch auf der Anzeigeeinheit aus. Durch diese Art der Darstellung kann eine Beschriftung bzw. Kenntlichmachung des mindestens einen Steigungswertes entlang der Ist-Route leichter erfassbar angeordnet werden, da Ist-Route im Gegensatz zur Einbettung in ein dreidimensionales Gelände nicht mehr vollständig von Geländeflächen umgeben ist. Jenseits der Schnittkante ergeben sich genügend Freiflächen, auf denen sowohl der mindestens eine Wert der Steigung gut erkennbar angezeigt werden kann als auch weitere Beschriftungen oder Routenführungshinweise platziert werden können.

Bei einer Weiterbildung des erfindungsgemäßen Systems sind in der Speichereinrichtung die dreidimensionalen Daten einer Straßenkarte abgelegt und die Recheneinheit berechnet zwischen der Startposition und der Zielposition eine dreidimensionale Soll-Route und legt diese dreidimensionale Soll-Route in der Speichereinrichtung ab. Dies vereinfacht die spätere Erzeugung der grafischen Darstellung des Höhenverlaufs der Soll-Route. Bei einer zweidimensionalen Soll-Route muss erst ein Abgleich zwischen den zweidimensionalen Soll-Routendaten und den dreidimensionalen Geländedaten stattfinden, um jedem Punkt der Soll-Route eine Höheninformation zuordnen zu können. Wird die Soll-Route dagegen innerhalb einer dreidimensionalen Straßenkarte geplant, so ist die Höheninformation von vornherein als dritte Koordinate enthalten.

In einer Unterausführung erzeugt die Recheneinheit die dreidimensionalen Daten der Straßenkarte aus zweidimensionalen Straßennetzdaten und den dreidimensionalen Daten des Geländes. In heute üblichen Straßennetzkarten, die für Routenplanungs- und Routenführungszwecke auf dem Markt erhältlich sind, werden die zu den Straßen gehörenden Punkte zweidimensional, mit x- und y-Koordinaten, beschrieben. Dreidimensionale Straßennetzkarten sind noch nicht verfügbar. Um also eine dreidimensionale Routenplanung durchführen zu können, muss zuerst eine dreidimensionale Straßenkarte generiert werden, wozu die Recheneinheit die x-y-Koordinaten einer Straßennetzkarte mit den x-y-z-Koordinaten des zugehörigen Geländes verknüpft.

In einer weiteren Unterausführung vergleicht die Recheneinheit die aktuelle dreidimensionale Position mit den dreidimensionalen Daten der Straßenkarte und führt ein dreidimensionales Map-Matching durch. Damit wird das bisher nur mit zweidimensionalen Koordinaten bekannte Navigieren auch vollständig dreidimensional möglich, d.h. dass die Recheneinheit neben der Berechnung einer dreidimensionalen Soll-Route und der Ermittlung einer dreidimensionalen Ist-Route auch einen dreidimensionalen Abgleich zwischen den beiden Routen durchführt und dem Bediener entsprechende Routenführungshinweise ausgibt. Diese können neben den bekannten zweidimensionalen Hinweisen nun auch Bezüge zu Höhenänderungen beinhalten, wie beispielsweise eine Sprachanweisung "Bitte am Ende des Anstiegs in die rechte Spur wechseln."

Die Erfindung wird nachfolgend anhand eines Ausführungsbeispiels und der Zeichnung näher erläutert. Es zeigen
- Figur 1: ein System zur Routenführung eines Bedieners;
- Figur 2: eine Darstellung eines Höhenverlaufs einer Soll-Route und einer Ist-Route mit verschiedenen Steigungswerten;
- Figur 3: eine Darstellung eines teilweise entlang einer Ist-Route geschnittenen, dreidimensionalen Geländes mit mittleren Geschwindigkeiten;
- Figur 4: eine Darstellung eines entlang einer Ist-Route und einer Soll-Route geschnittenen, dreidimensionalen Geländes mit verschiedenen Steigungswerten.

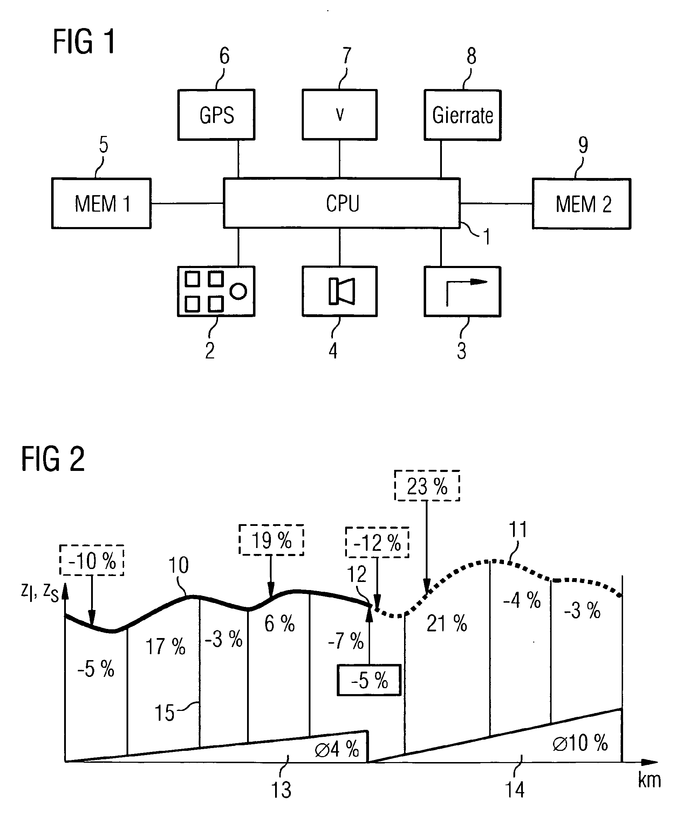

In Figur 1 ist ein System zur Routenführung eines Kraftfahrzeugführers dargestellt, mit einer Recheneinheit 1 und verschiedenen, jeweils mit der Recheneinheit 1 verbundenen Sensoren, Speichern und Ein- und Ausgabeeinheiten. Das System ist als Navigationssystem in einem Kraftfahrzeug fest installiert. Ein GPS-Empfänger 6, eine Geschwindigkeitsmesseinrichtung 7 und ein Gierratensensor 8 bilden eine, aus heutigen Kraftfahrzeug-Navigationssystemen bekannte, Positionserfassungseinrichtung. Die Speichereinrichtung 5 stellt einen Festwertspeicher dar, beispielsweise ein Flash-ROM, und die Speichereinrichtung 9 eine in einem Laufwerk befindliche DVD. Während auf der DVD zweidimensionale Straßennetzdaten und dreidimensionale Geländedaten enthalten sind, speichert das Flash-ROM eine vorab von der Recheneinheit 1 berechnete dreidimensionale Soll-Route. Als Ausgabeeinheiten sind eine grafische Anzeigeeinheit 3 sowie eine akustische Ausgabeeinheit 4 vorhanden, so dass neben den im Folgenden beschriebenen grafischen Ausgaben auch Sprachausgaben möglich sind. Mittels der Eingabeeinheit 2 kann der Kraftfahrzeugführer das System in der üblichen Weise bedienen, beispielsweise gewünschte Ausgabefenster oder Darstellungsoptionen anwählen sowie einen Routenplanungsvorgang spezifizieren und starten.

Nachdem der Kraftfahrzeugführer mit seinem Kraftfahrzeug bereits einen Teil der Soll-Route absolviert hat, veranlasst die Recheneinheit 1 die Ausgabe der grafischen Darstellung aus Figur 2 auf der Anzeigeeinheit 3. Zu sehen sind der durchgezogen dargestellte Höhenverlauf 10 der Ist-Route sowie der ab der aktuellen Position 12 gepunktet dargestellte Höhenverlauf 11 des noch zurückzulegenden Teils der Soll-Route.

Die Soll-Route wurde vorab von der Recheneinheit 1 in dreidimensionalen Koordinaten xₛ, yₛ und zₛ berechnet. Der Höhenverlauf 11 der Soll-Route entspricht demnach dem Verlauf der Koordinate zₛ. Für die Berechnung der Soll-Route hat die Recheneinheit 1 die der Speichereinrichtung 9 entnommene zweidimensionale Straßennetzkarte mit den ebenfalls in der Speichereinrichtung 9 enthaltenen dreidimensionalen Geländedaten zu einer dreidimensionalen Straßenkarte verknüpft. Innerhalb der dreidimensionalen Straßenkarte hat sie dann die dreidimensionale Soll-Route von einer Startposition zu einer Zielposition berechnet. Sowohl die dreidimensionale Soll-Route als auch die dreidimensionale Straßenkarte sind von der Recheneinheit 1 in der Speichereinrichtung 5 abgelegt worden.

Während der Routenverfolgung hat dann der GPS-Empfänger 6 die jeweils aktuelle dreidimensionale GPS-Position des Kraftfahrzeugs und damit auch des Kraftfahrzeugführers bestimmt. Diese GPS-Positionen sind von der Recheneinheit 1 nach dem bekannten Dead-Reckoning-Verfahren mittels der von der Messeinrichtung 7 bestimmten Geschwindigkeit sowie der vom Sensor 8 gemessenen Gierrate korrigiert worden, woraus die jeweils aktuelle, dreidimensionale Position des Kraftfahrzeugführers entstanden ist. Aus der Aufeinanderfolge von aktuellen Positionen zwischen der Startposition und der zuletzt bestimmten, aktuellen Position bildet die Recheneinheit den Verlauf der Ist-Route mit den Koordinaten x_{I}, y_{I} und z_{I}, wobei die Koordinate z_{I} direkt den Höhenverlauf der Ist-Route wiedergibt.

Entlang der Höhenverläufe 10 und 11 sind in Figur 2 verschiedene Werte von Steigungen der Ist- bzw. der Soll-Route zu sehen. Die durchgezogen umrandete Steigung -5% gibt den Steigungswert an der aktuellen Position 12 an. Die gestrichelt umrandeten Steigungen -10% und -12% stehen für die jeweils minimale Steigung im Bereich vor und im Bereich nach der aktuellen Position, d.h. die -10% gibt die minimale Steigung auf der Ist-Route an und die -12% die minimale Steigung auf dem verbliebenen Teil der Soll-Route. Analog verhält es sich mit den gestrichelt umrandeten, maximalen Werten 19% und 23%. Die Zuordnung zwischen den umrandeten Steigungswerten und dem zugehörigen Abschnitt der Höhenverläufe wird jeweils durch einen Pfeil kenntlich gemacht. Weiterhin zu sehen sind der Durchschnittswert der Steigung der gesamten Ist-Route von 4% sowie der Durchschnittswert der Steigung des noch zurückzulegenden Teils der Sollroute von 10%. Deren Zuordnung zu den Routenabschnitten wird mittels der Dreiecke 13 und 14 verdeutlicht, wobei die Höhe der Dreiecke gleichzeitig ein Indiz für den Wert der Durchschnittssteigung ist. Zusätzlich sind die Steigungswerte von Teilabschnitten der Ist-Route und Teilabschnitten der Soll-Route angezeigt. Die Abgrenzung der Teilabschnitte voneinander erfolgt über die senkrecht verlaufenden Linien 15 und die zwischen zwei solchen Linien eingetragenen, nicht umrandeten Steigungswerte geben den zugehörigen, für diesen Teilabschnitt gemittelten Steigungswert an. Der Wert -7% wird dabei für einen Teilabschnitt angegeben, in dessen Mitte sich die aktuelle Position 12 befindet, d.h. zu dem Teilabschnitt gehört sowohl der Endbereich der Ist-Route als auch der Anfangsbereich des noch zurückzulegenden Teils der Soll-Route. Für diesen Teilabschnitt konnte die Recheneinheit 1 den mittleren Steigungswert von -7% direkt anhand der Soll-Route berechnen, da die Ist-Route und die Soll-Route in diesem Beispiel übereinander liegen, d.h. der Kraftfahrzeugführer ist nicht von der Soll-Route abgewichen. Die Unterscheidung zwischen den verschiedenen Typen von Steigungswerten kann anstelle von Umrandungen auch mittels farblicher Gestaltung, durch die Wahl verschiedener Schrifttypen und Größen oder durch grafische Symbole kenntlich gemacht werden. Anstelle von Zahlenwerten können auch Wertebereiche der Steigung definiert werden, wobei jedem Wertebereich eine eigene Farbe oder Linienart zugeordnet und im Höhenverlauf entsprechend eingetragen wird. Die Zugehörigkeit der Steigungswerte zu den jeweiligen Abschnitten kann außerdem durch farbliche oder sonstige gestalterische Übereinstimmung hervorgehoben werden.

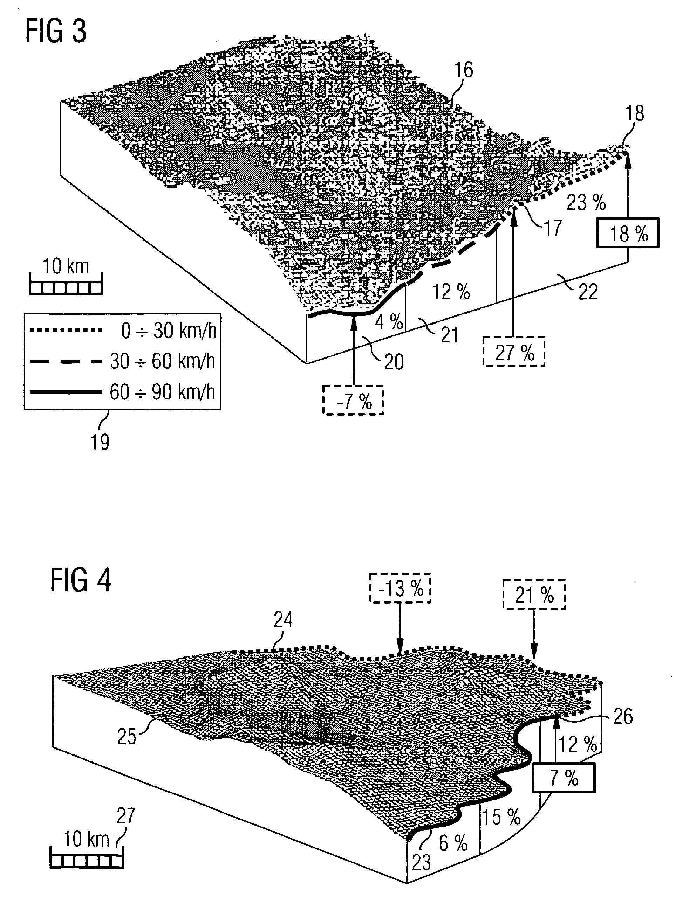

Zu einem anderen Zeitpunkt der aktuellen Fahrt wechselt die Recheneinheit 1 auf Wunsch des Kraftfahrzeugführers die grafische Darstellung zur Figur 3. Dort sind die Oberfläche des dreidimensionalen Geländes 16 sowie der Höhenverlauf der Ist-Route bis zur aktuellen Position 18 dargestellt. Das dreidimensionale Gelände wurde entlang der Ist-Route geschnitten und die Schnittkante 17 gibt den entsprechenden Höhenverlauf der Ist-Route an.
Entlang des Höhenverlaufs sind verschiedene, vom Kraftfahrzeug gefahrene Geschwindigkeiten dargestellt. Dabei werden die Geschwindigkeiten in Geschwindigkeitsbereiche unterteilt, wobei jedem Geschwindigkeitsbereich eine eigene Linienart zugeordnet ist, entsprechend der Legende 19. Im ersten Abschnitt 20 der Ist-Route ging es teilweise bergab, weshalb eine höhere Geschwindigkeit im Bereich zwischen 60 und 90 km/h gefahren wurde. Anschließend ging es nur noch bergauf. Im Abschnitt 21 konnte entsprechend noch eine Geschwindigkeit zwischen 30 und 60 km/h gehalten werden. Im letzten Abschnitt 22 bis zur jetzigen Position 18 fiel die Geschwindigkeit jedoch auf unter 30 km/h ab. Den Abschnitten 20 bis 22 ist jeweils ein mittlerer Steigungswert von 4%, 12% bzw. 23% zugeordnet. Außerdem sind analog zur Figur 2 der minimale Wert von -7% und der maximale Wert von 27% sowie die aktuelle Steigung von 18% eingetragen. Anhand der Darstellung in Figur 3 kann sich der Kraftfahrzeugführer ein umfassendes Bild vom Zusammenhang zwischen dem Höhenverlauf und seinen gefahrenen Geschwindigkeiten machen. Wechselt er zurück zur Darstellung entsprechend Figur 2, kann er anhand der Steigungswerte der noch zu fahrenden Soll-Route gut abschätzen, welche Geschwindigkeiten er zukünftig noch erreichen wird. Alternativ kann auch die Recheneinheit 1 anhand der gefahrenen Geschwindigkeiten und der Steigungswerte der noch zurückzulegenden Strecke eine Prognose hinsichtlich der mittleren Geschwindigkeit und der voraussichtlich benötigten Fahrzeit erstellen und dem Fahrzeugführer anzeigen.
Eine mögliche Erweiterung der Darstellung aus Figur 3 besteht in der Anzeige der Geschwindigkeitsbereiche durch unterschiedliche Farben oder durch die Ausgabe mittlerer Geschwindigkeitswerte in Form von Zahlenwerten.
Figur 4 zeigt eine weitere mögliche Darstellung des Höhenverlaufs der Ist-Route und der Soll-Route. Der Höhenverlauf 23 der Ist-Route ist wieder durchgezogen dargestellt und der Höhenverlauf 24 des noch zurückzulegenden Teils der Soll-Route gepunktet. Das dreidimensionale Gelände wurde sowohl entlang der Ist-Route als auch entlang der Soll-Route geschnitten und es wird nur der von beiden Routen eingefasste Teil 25 des Geländes angezeigt. An der aktuellen Position 26 wird eine Steigungswert von 7% angezeigt. Des Weiteren sind abschnittsweise mittlere Steigungen von 6%, 15% und 12% angegeben. Um dem Fahrzeugführer Informationen über den zukünftigen Routenverlauf zu vermitteln, werden außerdem die minimale Steigung von -13% und die maximale Steigung von 21% des noch zurückzulegenden Teils der Soll-Route angezeigt. Der Längenmaßstab 27 vermittelt einen Eindruck von der tatsächlichen Länge der Routen.

## Patentansprüche

1. System zur Routenführung eines Bedieners von einer Startposition zu einer Zielposition entlang einer geplanten Soll-Route mit einer Recheneinheit (1), einer mit der Recheneinheit (1) verbundenen Positionserfassungseinrichtung (6, 7, 8) zur Bestimmung von dreidimensionalen Koordinaten einer aktuellen Position (12, 18, 26) des Bedieners, einer mit der Recheneinheit (1) verbundenen Speichereinrichtung (5, 9) zur Speicherung der Soll-Route und zur Speicherung von dreidimensionalen Daten eines Geländes, durch welches die Soll-Route verläuft, sowie mit einer mit der Recheneinheit (1) verbundenen grafischen Anzeigeeinheit (3), wobei die Recheneinheit (1)
- aus dem Verlauf der Soll-Route innerhalb des dreidimensionalen Geländes mindestens einen Wert der Steigung der Soll-Route auf einem zugehörigen, vor der aktuellen Position (12, 18, 26) liegenden Teilabschnitt der Soll-Route bestimmt,
- aus der Soll-Route und den dreidimensionalen Daten des Geländes eine auf der Anzeigeeinheit (3) auszugebende grafische Darstellung erzeugt, die den Höhenverlauf (11, 24) der Soll-Route sowie die aktuelle Position (12, 18, 26) wiedergibt und innerhalb der der mindestens eine Wert der Steigung in grafischer Zuordnung zu dem zugehörigen Teilabschnitt der Soll-Route kenntlich gemacht ist, und
**dadurch gekennzeichnet, dass** die Recheneinheit (1) das dreidimensionale Gelände entlang des Höhenverlaufs der Soll-Route (24) abschneidet und den verbliebenen Teil des dreidimensionalen Geländes (16, 25) sowie den Höhenverlauf der Soll-Route (24) entlang der entstandenen Schnittkante grafisch darstellt und auf der Anzeigeeinheit (3) ausgibt.

2. System nach Anspruch 1, **dadurch gekennzeichnet, dass** der mindestens eine Wert der Steigung ein über mehrere Teilabschnitte der Soll-Route gemittelter Wert ist.

3. System nach Anspruch 2, **dadurch gekennzeichnet, dass** die Recheneinheit (1) den Wert der Steigung über die mehreren Teilabschnitte der Soll-Route mittelt, die zwischen der aktuellen Position (12, 18, 26) und der Zielposition liegen.

4. System nach einem der vorhergehenden Ansprüche 2 oder 3, **dadurch gekennzeichnet, dass** die Recheneinheit (1) den Wert der Steigung über die mehreren Teilabschnitte der Soll-Route mittelt, die zwischen der Startposition und der aktuellen Position (12, 18, 26) liegen.

5. System nach Anspruch 1, **dadurch** gekennzeichn e t, dass der mindestens eine Wert der Steigung der maximale und/oder minimale Wert der Steigung auf dem zugehörigen Teilabschnitt der Soll-Route ist.

6. System nach Anspruch 1, **dadurch gekennzeichnet, dass** der mindestens eine Wert der Steigung der maximale und/oder minimale Wert der Steigung der gesamten Soll-Route ist.

7. System nach einem der vorhergehenden Ansprüche, **dadurch gekennzeichnet, dass** die Recheneinheit (1) aus einer Aufeinanderfolge von dreidimensionalen Positionen zwischen der Startposition und der aktuellen Position (12, 18, 26) eine aktuell zurückgelegte, dreidimensionale Ist-Route ermittelt, für die Ist-Route mindestens einen Wert der Steigung auf einem zugehörigen Teilabschnitt der Ist-Route berechnet und den Höhenverlauf (10, 23) sowie den mindestens einen Wert der Steigung der Ist-Route gemeinsam mit dem Höhenverlauf (11, 24) der Soll-Route grafisch darstellt und auf der Anzeigeeinheit ausgibt.

8. System nach Anspruch 7, **dadurch** gekennzeichne t, dass die Recheneinheit (1) die auf mindestens einem Teilabschnitt der Ist-Route erreichte mittlere Geschwindigkeit ermittelt und entlang des Höhenverlaufs (17) der Ist-Route zugeordnet zu dem mindestens einen Teilabschnitt grafisch darstellt und auf der Anzeigeeinheit (3) ausgibt.

9. System nach einem der vorhergehenden Ansprüche, **dadurch gekennzeichnet, dass** die Recheneinheit (1) den Höhenverlauf der Soll-Route und/oder der Ist-Route in eine dreidimensionale Darstellung des Geländes einbettet und beides auf der Anzeigeeinheit ausgibt.

10. System nach einem der vorhergehenden Ansprüche 1 bis 8, **dadurch gekennzeichnet, dass** die Recheneinheit (1) das dreidimensionale Gelände entlang des Höhenverlaufs der Ist-Route (17, 23) abschneidet und den verbliebenen Teil des dreidimensionalen Geländes (16, 25) sowie den Höhenverlauf der Ist-Route (17, 23) entlang der entstandenen Schnittkante grafisch darstellt und auf der Anzeigeeinheit (3) ausgibt.

11. System nach einem der vorhergehenden Ansprüche, **dadurch gekennzeichnet, dass** in der Speichereinrichtung (5, 9) dreidimensionale Daten einer Straßenkarte abgelegt sind und dass die Recheneinheit (1) eine dreidimensionale Soll-Route zwischen der Startposition und der Zielposition berechnet und die dreidimensionale Soll-Route in der Speichereinrichtung (5) ablegt.

12. System nach Anspruch 11, **dadurch gekennzeichnet, dass** die Recheneinheit (1) die dreidimensionalen Daten der Straßenkarte aus zweidimensionalen Straßennetzdaten und den dreidimensionalen Daten des Geländes erzeugt.

13. System nach einem der vorhergehenden Ansprüche 11 bis 12, **dadurch gekennzeichnet, dass** die Recheneinheit (1) die aktuelle dreidimensionale Position (12, 18, 26) mit den dreidimensionalen Daten der Straßenkarte vergleicht und ein dreidimensionales Map-Matching durchführt.

14. Verfahren zur Routenführung eines Bedieners von einer Startposition zu einer Zielposition entlang einer geplanten Soll-Route, die zusammen mit dreidimensionalen Daten eines Geländes, durch welches die Soll-Route verläuft, in einer Speichereinrichtung (5, 9) gespeichert ist, bei dem
- dreidimensionale Koordinaten einer aktuellen Position (12, 18, 26) des Bedieners mit einer Positionserfassungseinrichtung (6, 7, 8) bestimmt werden,
- mindestens ein Wert der Steigung der Soll-Route auf einem zugehörigen, vor der aktuellen Position (12, 18, 26) liegenden Teilabschnitt der Soll-Route aus dem Verlauf der Soll-Route innerhalb des dreidimensionalen Geländes bestimmt wird,
- eine auf einer grafischen Anzeigeeinheit (3) auszugebende grafische Darstellung aus der Soll-Route und den dreidimensionalen Daten des Geländes erzeugt wird, wobei die grafische Darstellung einen Höhenverlauf (11, 24) der Soll-Route sowie eine aktuelle Position (12, 18, 26) wiedergibt und wobei innerhalb der grafischen Darstellung der mindestens eine Wert der Steigung in grafischer Zuordnung zu dem zugehörigen Teilabschnitt der Soll-Route kenntlich gemacht ist,
**dadurch gekennzeichnet, dass** das dreidimensionale Gelände entlang des Höhenverlaufs der Soll-Route (24) abgeschnitten wird und der verbliebene Teil des dreidimensionalen Geländes (16, 25) sowie der Höhenverlauf der Soll-Route (24) entlang der entstandenen Schnittkante grafisch dargestellt wird und auf der Anzeigeeinheit (3) ausgegeben wird.

## Claims

1. System for the route guidance of a user from a start position to a destination position along a planned intended route, having a computer unit (1), a position fixing device (6, 7, 8) connected to the computer unit (1) for determining three-dimensional coordinates of a current position (12, 18, 26) of the user, a storage means (5, 9) connected to the computer unit (1) for storing the intended route and for storing three-dimensional data of terrain through which the intended route runs, as well as a graphical display unit (3) connected to the computer unit (1), in which the computer unit (1)
- determines a gradient value of the intended route on an associated section of the intended route ahead of the current position (12, 18, 26) from the course of the intended route within the three-dimensional terrain,
- generates from the intended route and the three-dimensional terrain data a graphical representation to be output on the display unit (3) which indicates the elevation track (11, 24) of the intended route as well as the current position (12, 18, 26), and within which the at least one gradient value is graphically linked with the associated section of the intended route, and
**characterized in that** the computer unit (1) cuts away the three-dimensional terrain along the elevation track of the intended route (24) and graphically represents and outputs on the display unit (3) the remaining part of the three-dimensional terrain (16, 25) as well as the elevation track of the intended route (24) along the resulting cutaway edge.

2. System according to Claim 1, **characterized in that** the at least one gradient value is a value averaged over a plurality of sections of the intended route.

3. System according to Claim 2, **characterized in that** the computer unit (1) averages the gradient value over the plurality of sections of the intended route that lie between the current position (12, 18, 26) and the destination position.

4. System according to one of the preceding Claims 2 or 3, **characterized in that** the computer unit (1) averages the gradient value over the plurality of sections of the intended route that lie between the start position and the current position (12, 18, 26).

5. System according to Claim 1, **characterized in that** the at least one gradient value is the maximum and/or minimum gradient value on the associated section of the intended route.

6. System according to Claim 1, **characterized in that** the at least one gradient value is the maximum and/or minimum gradient value of the entire intended route.

7. System according to one of the preceding claims, **characterized in that** the computer unit (1) determines from a series of three-dimensional positions between the start position and the current position (12, 18, 26) a currently travelled, three-dimensional actual route, calculates for the actual route at least one gradient value on an associated section of the actual route, and graphically represents and outputs on the display unit the elevation track (10, 23) as well as the at least one gradient value of the actual route together with the elevation track (11, 24) of the intended route.

8. System according to Claim 7, **characterized in that** the computer unit (1) calculates the average speed attained on at least one section of the actual route and represents it along the elevation track (17) of the actual route graphically linked to the at least one section and outputs it on the display unit (3) .

9. System according to one of the preceding claims, **characterized in that** the computer unit (1) embeds the elevation track of the intended route and/or of the actual route in a three-dimensional representation of the terrain and outputs both on the display unit.

10. System according to one of the preceding Claims 1 to 8, **characterized in that** the computer unit (1) cuts away the three-dimensional terrain along the elevation track of the actual route (17, 23) and graphically represents and outputs on the display unit (3) the remaining part of the three-dimensional terrain (16, 25) as well as the elevation track of the actual route (17, 23) along the resulting cutaway edge.

11. System according to one of the preceding claims, **characterized in that** three-dimensional data of a road map is stored in the storage means (5, 9) and **in that** the computer unit (1) calculates a three-dimensional intended route between the start position and the destination position and stores the three-dimensional intended route in the storage means (5).

12. System according to Claim 11, **characterized in that** the computer unit (1) generates the three-dimensional data of the road map from two-dimensional road network data and the three-dimensional terrain data.

13. System according to one of the preceding Claims 11 to 12, **characterized in that** the computer unit (1) compares the current three-dimensional position (12, 18, 26) with the three-dimensional data of the road map and performs a three-dimensional map-matching.

14. Method for the route guidance of a user from a start position to a destination position along a planned intended route which is stored, together with three-dimensional data of terrain through which the intended route runs, in a storage means (5, 9), in which
- three-dimensional coordinates of a current position (12, 18, 26) of the user are determined with a position fixing device (6, 7, 8),
- at least one gradient value of the intended route on an associated section of the intended route ahead of the current position (12, 18, 26) is determined from the course of the intended route within the three-dimensional terrain,
- a graphical representation to be output on a graphical display unit (3) is generated from the intended route and the three-dimensional terrain data, with the graphical representation indicating an elevation track (11, 24) of the intended route as well as a current position (12, 18, 26), and the at least one gradient value is graphically linked with the associated section of the intended route within the graphical representation,
**characterized in that** the three-dimensional terrain along the elevation track of the intended route (24) is cut away and the remaining part of the three-dimensional terrain (16, 25) as well as the elevation track of the intended route (24) along the resulting cutaway edge is graphically represented and is output on the display unit (3).

## Revendications

1. Système permettant de piloter un opérateur le long d'un itinéraire planifié théorique, entre une position de départ et une position de destination, ledit système comportant une unité de calcul (1), un dispositif (6, 7, 8) de détection de la position, relié à l'unité de calcul (1) et permettant de déterminer les coordonnées en trois dimensions d'une position actuelle (12, 18, 26) de l'opérateur, un dispositif de mémorisation (5, 9), relié à l'unité de calcul (1) et permettant de mémoriser l'itinéraire théorique et de mémoriser les données en trois dimensions d'un terrain à travers lequel passe l'itinéraire théorique, ainsi qu'une unité d'affichage graphique (3) reliée à l'unité de calcul (1), où l'unité de calcul (1)
- détermine, à partir du tracé de l'itinéraire théorique à travers le terrain en trois dimensions, au moins une valeur de pente de l'itinéraire théorique sur une section partielle correspondante de l'itinéraire théorique se trouvant devant la position actuelle (12, 18, 26),
- génère, à partir de l'itinéraire théorique et des données en trois dimensions du terrain, une représentation graphique à éditer sur l'unité d'affichage (3), laquelle représentation graphique représente la courbe des altitudes (11, 24) de l'itinéraire théorique, ainsi que la position actuelle (12, 18, 26), et à l'intérieur de laquelle représentation la au moins une valeur de pente est repérée par une concordance graphique avec la section partielle correspondante de l'itinéraire théorique, et
**caractérisé par le fait que** l'unité de calcul (1) découpe le terrain en trois dimensions le long de la courbe des altitudes de l'itinéraire théorique (24) et représente graphiquement la partie restante du terrain en trois dimensions (16, 25), ainsi que la courbe des altitudes de l'itinéraire théorique (24) le long de l'arête de coupe produite et l'édite sur l'unité d'affichage (3).

2. Système selon la revendication 1, **caractérisé par le fait que** la au moins une valeur de la pente est une valeur moyenne établie sur plusieurs sections partielles de l'itinéraire théorique.

3. Système selon la revendication 2, **caractérisé par le fait que** l'unité de calcul (1) fait la moyenne de la valeur de pente sur plusieurs sections partielles de l'itinéraire théorique qui se trouvent entre la position actuelle (12, 18, 26) et la position de destination.

4. Système selon l'une des revendications précédentes 2 ou 3, **caractérisé par le fait que** l'unité de calcul (1) fait la moyenne de la valeur de la pente sur plusieurs sections partielles de l'itinéraire théorique qui se trouvent entre la position de départ et la position actuelle (12, 18, 26).

5. Système selon la revendication 1, **caractérisé par le fait que** la au moins une valeur de la pente est la valeur maximum et/ou la valeur minimum de la pente sur la section partielle correspondante de l'itinéraire théorique.

6. Système selon la revendication 1, **caractérisé par le fait que** la au moins une valeur de la pente est la valeur maximum et / ou la valeur minimum de la pente sur l'ensemble de l'itinéraire théorique.

7. Système selon l'une des revendications précédentes, **caractérisé par le fait que** l'unité de calcul (1) détermine, à partir d'une succession de positions en trois dimensions entre la position de départ et la position actuelle (12, 18, 26), un itinéraire effectif en trois dimensions qui a été parcouru jusque-là, calcule pour l'itinéraire effectif au moins une valeur de pente sur une section partielle correspondante de l'itinéraire effectif et représente graphiquement la courbe des altitudes (10, 23), ainsi que la au moins une valeur de la pente de l'itinéraire effectif en commun avec la courbe des altitudes (11, 24) de l'itinéraire théorique et l'édite sur l'unité d'affichage.

8. Système selon la revendication 7, **caractérisé par le fait que** l'unité de calcul (1) détermine la vitesse moyenne obtenue sur au moins une section partielle de l'itinéraire effectif et la représente graphiquement le long de la courbe des altitudes (17) de l'itinéraire effectif, en correspondance avec la au moins une section partielle et l'édite sur l'unité d'affichage (3).

9. Système selon l'une des revendications précédentes, **caractérisé par le fait que** l'unité de calcul (1) intègre la courbe des altitudes de l'itinéraire théorique et/ou de l'itinéraire effectif dans une représentation en trois dimensions du terrain et les édite toutes les deux sur l'unité d'affichage.

10. Système selon l'une des revendications précédentes 1 à 8, **caractérisé par le fait que** l'unité de calcul (1) découpe le terrain en trois dimensions le long de la courbe des altitudes de l'itinéraire effectif (17, 23) et représente graphiquement la partie restante du terrain en trois dimensions (16, 25), ainsi que la courbe des altitudes de l'itinéraire effectif (17, 23) le long de l'arête de coupe produite et les édite sur l'unité d'affichage (3).

11. Système selon l'une des revendications précédentes, **caractérisé par le fait que** des données en trois dimensions d'une carte routière sont stockées dans le dispositif de mémorisation (5, 9) et que l'unité de calcul (1) calcule un itinéraire théorique en trois dimensions entre la position de départ et la position de destination et stocke cet itinéraire théorique en trois dimensions dans le dispositif de mémorisation (5).

12. Système selon la revendication 11, **caractérisé par le fait que** l'unité de calcul (1) génère les données en trois dimensions de la carte routière à partir de données du réseau routier en deux dimensions et génère les données en trois dimensions du terrain.

13. Système selon l'une des revendications précédentes 11 à 12, **caractérisé par le fait que** l'unité de calcul (1) compare la position actuelle (12, 18, 26) en trois dimensions avec les données en trois dimensions de la carte routière et exécute une corrélation avec la carte ("map-matching", en anglais) en trois dimensions.

14. Procédé permettant de piloter un opérateur le long d'un itinéraire planifié théorique, entre une position de départ et une position de destination, ledit itinéraire planifié théorique étant stocké, en commun avec les données en trois dimensions d'un terrain à travers lequel passe l'itinéraire théorique, dans un dispositif de mémorisation (5, 9), au cours duquel
- des coordonnées en trois dimensions d'une position actuelle (12, 18, 26) de l'opérateur sont déterminées par un dispositif de détection de la position (6,7,8),
- au moins une valeur de pente de l'itinéraire théorique est déterminé, à partir du tracé de l'itinéraire théorique à l'intérieur du terrain en trois dimensions, sur une section partielle correspondante de l'itinéraire théorique se trouvant devant la position actuelle (12, 18, 26),
- une représentation graphique à éditer sur une unité graphique d'affichage (3) est générée, à partir de l'itinéraire théorique et des données en trois dimensions du terrain, la représentation graphique reproduisant une courbe des altitudes (11, 24) de l'itinéraire théorique, ainsi qu'une position actuelle (12, 18, 26) et la au moins une valeur de la pente étant identifiée sur la représentation graphique en concordance graphique avec la section partielle correspondante de l'itinéraire théorique,
**caractérisé par le fait que** le terrain en trois dimensions est découpé le long de la courbe des altitudes de l'itinéraire théorique (24) et la partie restante du terrain en trois dimensions (16, 25), ainsi que la courbe des altitudes de l'itinéraire théorique (24) le long de l'arête de coupe produite sont représentées graphiquement et sont éditées sur l'unité d'affichage (3).
